# EUROPEAN PATENT APPLICATION

(11) **EP 4 458 606 A1**
(43) Date of publication of application: **06.11.2024**
(21) Application number: 22914869.7
(22) Date of filing: 28.12.2022
(51) Int. Cl.: B60L 53/62, H02J 7/00, G01R 31/00

(54) **CHARGING SYSTEM AND CHARGING METHOD FOR ELECTRIC VEHICLE, AND ELECTRIC VEHICLE**

(30) Priority: 30.12.2021 CN 202111660752
(71) Applicant: Changchun Jetty Automotive Technology Co., Ltd., Changchun City, Jilin Province 130000 (CN)
(72) Inventor: WANG, Chao, Changchun, Jilin 130000 (CN)
(74) Representative: Boult Wade Tennant LLP
(86) International application number: PCT/CN2022/142642
(87) International publication number: WO 2023/125617

(57) **Abstract**

The present disclosure provides a charging system and charging method for an electric automobile, and an electric automobile. The system includes: a human-machine interaction module (200), a power source module (300) and a main control module (100); the human-machine interaction module (200) is connected to the main control module, and configured to receive charging demand information of the electric automobile and send the charging demand information to the main control module (100); the power source module (300) includes a plurality of power source branches each of which includes a switch unit and a power source unit, and the switch unit is configured to switch on or switch off the power source branch in which it is located based on a turn-on signal or a turn-off signal of the main control module (100); and the main control module (100) is configured to determine, upon receipt of a charging demand of the electric automobile, the power source unit to be turned on or the power source unit to be turned off in the power source module based on the charging demand information, and send the turn-on signal or the turn-off signal to the power source branch in which the power source unit to be turned on or the power source unit to be turned off is located, to control the switch unit to switch on or switch off and the power source unit to be turned on or turned off. The present disclosure has the function of outputting large current and high power, thereby controlling the partially internal power source to work based on the charging demand, and achieving the function of adjustment.

## Description

The present disclosure claims priority to Chinese Patent Application NO. 202111660752.7, entitled 'charging system and charging method for electric automobile, and electric automobile' and filed on December 30, 2021, which is hereby incorporated by reference in its entity.

### TECHNICAL FIELD

The present disclosure relates to the technical field of the charging of electric automobiles, and particularly to a charging system and charging method for an electric automobile, and an electric automobile.

### BACKGROUND

With the rapid development of the automobile industry and people's enhanced social awareness of environmental protection, new energy electric automobiles are increasingly favored by people. The movement principle of a new energy electric automobile is to convert electric energy into kinetic energy by a motor to promote the movement of the automobile. The energy storage system is a battery, and in order to ensure the normal operation of the motor, it is necessary to charge the battery.

A charging system is needed when charging. The core component of the charging system is a power source, which converts alternating current of a power grid into direct current to charge the battery of the electric automobile. At present, the output power of the power source of the charging system is generally small and the charging is slow. With the development of the charging of the electric automobile, a concept of "super charging" has come out. The most obvious advantage of the "super charging" is that the charging speed is fast (large current and high power), which requires the charging system to have the function of outputting large current and high power, and the output power should be up to 100 kw or 200 kw. But at present, there is no power source capable of outputting such power.

### SUMMARY

An objective of the present disclosure is to provide a charging system and charging method for an electric automobile, and an electric automobile, so as to not only realize the function of outputting large current and high power, but also control the internal power sources to be partially turned on based on the charging demand, thereby reducing a lot of unnecessary energy loss and realizing the purpose of energy saving, and achieving the function of automatic adjustment.

In order to achieve the above objective, in an aspect, an embodiment of the present disclosure provides a charging system for an electric automobile, including: a human-machine interaction module, a power source module and a main control module;
the human-machine interaction module is connected to the main control module, and configured to receive charging demand information of the electric automobile and send the charging demand information to the main control module;
the power source module includes a plurality of power source branches each of which includes a switch unit and a power source unit, and the switch unit is configured to switch on or switch off the power source branch in which it is located based on a turn-on signal or a turn-off signal of the main control module; and
the main control module is configured to determine, upon receipt of a charging demand of the electric automobile, the power source unit to be turned on or the power source unit to be turned off in the power source module based on the charging demand information, and send the turn-on signal or the turn-off signal to the power source branch in which the power source unit to be turned on or the power source unit to be turned off is located, to control the switch unit to switch on or switch off and the power source unit to be turned on or turned off.

In another aspect, an embodiment of the present disclosure provides a charging method for an electric automobile, which is applied to the main control module of the above charging system for the electric automobile, the charging method including:
receiving charging demand information of the electric automobile;
determining the power source unit to be turned on or the power source unit to be turned off in the power source module based on the charging demand information, when receiving a charging demand of the electric automobile; and
sending the turn-on or the turn-off signal to the power source branch in which the power source unit to be turned on or the power source unit to be turned off is located.

In still another aspect, an embodiment of the present disclosure provides a computer device, including a memory, a processor, and a computer program stored on the memory, and when executed by a processor, the computer program implements the above method.

In still another aspect, an embodiment of the present disclosure provides a computer-readable storage medium storing a computer program, and when executed by a processor of a computer device, the computer program implements the above method.

In still another aspect, an embodiment of the present disclosure provides an electric automobile, including the charging system for the electric automobile.

As can be seen from the above technical solutions, the embodiments of the present disclosure receive the charging demand information of the electric automobile; determine the power source unit to be turned on or the power source unit to be turned off in the power source module based on the charging demand information when receiving the charging demand of the electric automobile; and send the turn-on signal or the turn-off signal to the power source branch in which the power unit to be turned on is located, to not only realize the function of outputting large current and high power, but also control partially internal power sources to work based on the charging demand, thereby reducing a lot of unnecessary energy loss, and achieving the purpose of energy saving, and realizing the function of automatic adjustment.

In order that the above and other objectives, features and advantages of the present disclosure can be more readily understood, exemplary embodiments of the present disclosure will be described in detail with reference to the drawings.

### BRIEF DESCRIPTION OF THE DRAWINGS

In order to more clearly illustrate the technical solutions in the embodiments of the present disclosure or in the prior art, the drawings to be used in the description of the embodiments or the prior art will be briefly introduced as follows. Obviously, the drawings used in the following description only illustrate some embodiments of the present disclosure, and those of ordinary skill in the art can obtain other drawings from them without paying any inventive effort.
FIG. 1 illustrates a schematic diagram of a module structure of a charging system for an electric automobile according to an embodiment of the present disclosure;
FIG. 2 illustrates a schematic diagram of a structure of a power source module according to an embodiment of the present disclosure;
FIG. 3 illustrates a schematic diagram of a structure of a main control module according to an embodiment of the present disclosure;
FIG. 4 illustrates a schematic diagram of a flowchart of a charging method for an electric automobile according to an embodiment of the present disclosure;
FIG. 5 illustrates a schematic diagram of a module structure of a charging apparatus for an electric automobile according to an embodiment of the present disclosure; and
FIG. 6 illustrates a schematic diagram of a structure of a computer device according to an embodiment of the present disclosure.

### DESCRIPTION OF THE EMBODIMENTS

The technical solutions in the embodiments of the present disclosure will be clearly and completely described below in conjunction with the drawings for the embodiments of the present disclosure. Obviously, those described are merely a part, rather than all, of the embodiments of the present disclosure. Based on the embodiments of the present disclosure, any other embodiment obtained by those of ordinary skill in the art without paying any creative effort should fall within the protection scope of the present disclosure.

During the charging of an electric automobile, a charging system is needed. The core component of the charging system is a power source, and the power source converts alternating current of a power grid into direct current to charge a battery of the electric automobile. At present, the output power of the power source of the charging system is generally small and the charging is slow. With the development of the charging of the electric automobile, a concept of "super charging" has come out. The most obvious advantage of the "super charging" is that the charging speed is fast (large current and high power), which requires the charging system to have the function of outputting large current and high power, and the output power should be up to 100 kw or 200 kw. But at present, there is no power source capable of outputting such power.

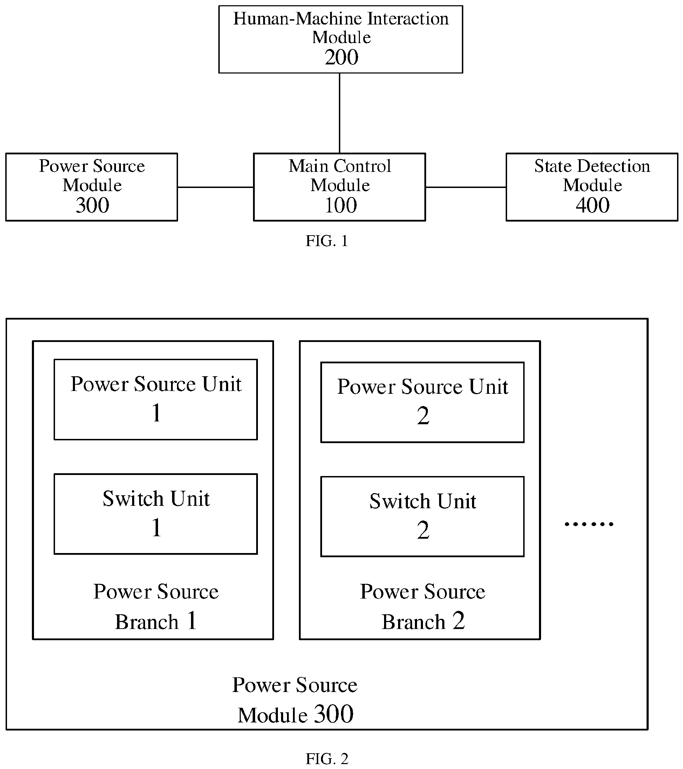

Referring to FIG. 1, in order to solve the above problem, an embodiment of the present disclosure provides a charging system for an electric automobile, including a human-machine interaction module 200, a power source module 300 and a main control module 100;
the human-machine interaction module 200 is connected to the main control module 100, and configured to receive charging demand information of the electric automobile and send the charging demand information to the main control module 100;
the power source module 300 includes a plurality of power source branches each of which includes a switch unit and a power source unit, and the switch unit is configured to switch on or switch off the power source branch in which it is located based on a turn-on signal or a turn-off signal of the main control module 100;
the main control module 100 is configured to determine, upon receipt of a charging demand of the electric automobile, the power source unit to be turned on or the power source unit to be turned off in the power source module 300 based on the charging demand information, and send the turn-on signal or the turn-off signal to the power source branch in which the power source unit to be turned on or the power source unit to be turned off is located, to control the switch unit to switch on or switch off and the power source unit to be turned on or turned off.

In this embodiment, the human-machine interaction module 200 may be a display screen with an operable interface, through which an automobile owner can input the charging demand of the electric automobile. In addition, the human-machine interaction module 200 may also be integrated on a handheld end, such as a mobile phone or a tablet computer, and the automobile owner can directly input the charging demand of the electric automobile through the handheld end.

Specifically, the charging demand information includes a charging current and a charging electricity quantity, and the charging electricity quantity may also be charging time. After the automobile owner inputs the charging demand into the human-machine interaction module 200, the human-machine interaction module 200 sends the charging demand information to the main control module 100.

The plurality of power source branches are connected in parallel. It should be noted that the parallel connection illustrated in the present disclosure does not mean that the plurality of power source branches are all connected in parallel, but means that the plurality of power source branches are connected in parallel in terms of the connection structure, that is, the ways of the plurality of power source branches are in the form of parallel connection.

Referring to FIG. 2, in an embodiment, all the power source branches connected in parallel may be numbered as 1, 2, 3, ..., in which a power source branch 1 includes a switch unit 1 and a power source unit 1, and so on for other subsequent power source branches. It can be further understood that in some embodiments, a plurality of power source units may be connected in series in each of the power source branches. Taking the power source branch 1 as an example, two or three or any suitable number of power source units may be connected in series in the power source branch 1. Therefore, in some embodiments, there may be the following situations: the power source branch 1 includes one switch unit and two power source units; and any other power source branch includes one switch unit and one power source unit. That is, among the plurality of power source branches, there is at least one power source branch with a plurality of power source units connected in series is connected in parallel with other power source branches each with only one power source unit; or each of the power source branches has a plurality of power source units connected in series. The power source unit is a power supply (AC/DC) for charging the electric automobile. The switch unit may be an electromagnetic relay provided outside and connected to the power source unit or an electromagnetic relay integrated on the power source unit. Therefore, switching on/switching off the power source branch in which the switch unit is located is realized.

The main control module 100 may determine the power source unit to be turned on or the power source unit to be turned off based on the charging demand information. In this embodiment, there may be a plurality of power source units to be turned on, and the corresponding switch units receive the turn-on signal of the main control module, so that a plurality of power source branches can be switched on. Since the power source branches are provided in parallel, which means that if any two or more power source branches are switched on, these switched on power source branches are connected in parallel. Therefore, a plurality of power source branches which are switched on after the reception of the turn-on signal of the main control module are connected in parallel to charge the electric automobile.

The automobile owner may input, according to his own demand, the charging demand of the electric automobile through the human-machine interaction module 200. Upon the reception of the charging demand of the electric automobile, the main control module 100 may determine the corresponding power source to be turned on or the corresponding power source to be turned off based on different charging demand information, to not only realize the function of outputting large current and high power, but also control partially internal power sources to work based on the charging demand, thereby reducing a lot of unnecessary energy loss, achieving the purpose of energy saving, and realizing the function of automatic adjustment.

Referring to FIG. 1, in the embodiment of the present disclosure, the charging system further includes a state detection module 400;
the state detection module 400 is connected to the main control module 100, and configured to detect a state of the charging system in real time and send state information of the charging system to the main control module 100; and
the main control module 100 is further configured to analyze the charging state information of the charging system upon receipt of the charging demand of the electric automobile, and if an analysis result indicates a normal state, perform the step of determining the power source unit to be turned on in the power source module 300 based on the charging demand information, and sending the turn-on signal to the power source branch in which the power source unit to be turned on is located, to control the switch unit to switch on and the power source unit to be turned on.
specifically, the state detection module 400 includes a system temperature sensor, a system ADC (analog to digital converter) sampling unit, etc., in which the temperature sensor may collect the information of the temperature of the charging system, and the ADC sampling unit may collect the information of the current and the voltage of the charging system. The state detection module 400 such as the system temperature sensor and the system ADC sampling unit may be directly mounted in the charging system.

In addition to detecting the charging state of the charging system by the state detection module 400, regarding the charging state of each of the power source units, the information of the temperature, the current and the voltage of the power source unit may be collected by the temperature sensor and the ADC sampling unit both of which are integrated on the power source unit. The charging state information of the charging system may be obtained by directly integrating the detected charging state of each of the power source units, or by eliminating the power source unit with the worst charging state and the power source unit with the best charging state and then integrating the charging states of the remaining power source units. Of course, the charging state information of the charging system may be obtained by other methods, which are not limited herein.

The main control module 100 analyzes the charging state information of the charging system when receiving the charging demand of the electric automobile, and does not perform the subsequent steps unless the analysis result indicates a normal state.

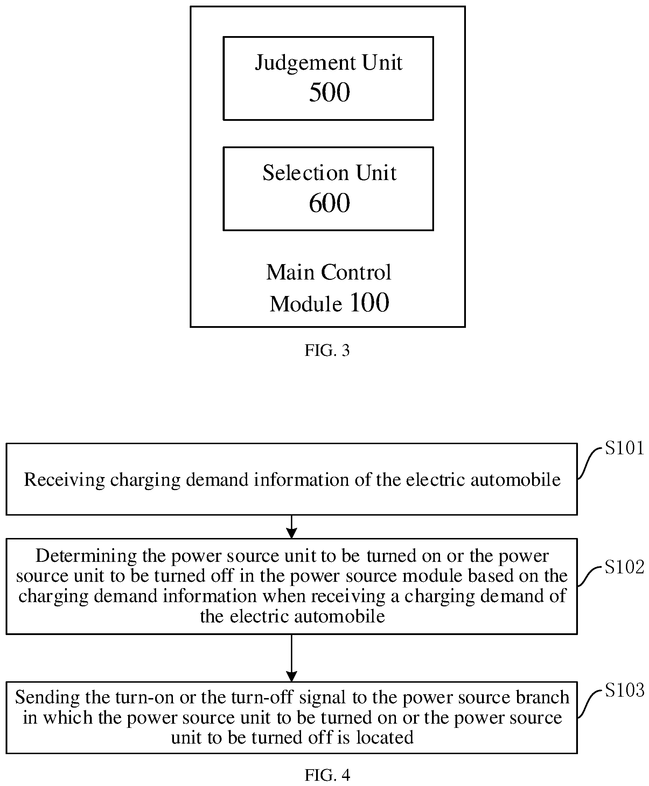

Referring to FIG. 3, in the embodiment of the present disclosure, the state information of the charging system includes: an input voltage of the charging system, a temperature of the charging system and an attribute of each power source unit;
the main control module 100 includes a judgement unit 500 and a selection unit 600;
the judgement unit 500 is configured to, upon receipt of the charging demand of the electric automobile, perform a state judgement process including the following items: judging whether the input voltage of the charging system is within a standard voltage range, whether the temperature of the charging system is below a system standard temperature, and whether the attributes of all the power source units are normal;
if the judgment results of all the items are Yes, determining that the state of the charging system is normal;
if the judgment result of one of the items is No, determining that the state of the charging system is abnormal; and
the selection unit 600 is configured to determine the power source unit to be turned on in the power source module 300 based on the charging demand information, and send the turn-on signal to the power source branch in which the power source unit to be turned on is located, to control the switch unit to switch on and the power source unit to be turned on.

In this embodiment, the input voltage of the charging system refers to a voltage input to the charging system. Generally, the electric energy of a power grid is input to a plurality of power source units, and then output to the electric automobile by the plurality of power source units for charging. The input voltage may be detected by the system ADC sampling unit, and the temperature of the charging system may be detected by the system temperature sensor. The power attribute of the power source unit may include but not limited to a temperature of the power source unit, a communication state of the power source unit and a discharge state of the power source unit. In addition, each of the power source units is integrated with a fan, and the power attribute of the power source unit may further include a fan state of the power source unit. The different attributes described above may be detected by using different sensors, detectors or probes.

Further, the normal power attribute of the power source unit may be that the temperature of the power source unit is below a power source standard temperature unit, the communication state with the power source unit is normal, the discharge state of the power source unit is normal, and the fan state in the power source unit is normal.

During the performance of the state judgment process, the state of the charging system is abnormal as long as one of the above judgment results is No.

In the embodiment of the present disclosure, the judgement unit 500 is further configured to, if the judgment result of one of the items is No, perform the following steps to determine whether the state of the charging system is abnormal: continuously judging said the one item and counting the number of times that the judgment result is No; if the counted number of times does not reach a preset number of times, the judgment result of said the one item is changed to Yes, determining that the state of the charging system is normal; and if the counted number of times reaches the preset number of times, the judgment result of said the one item is still No, determining that the state of the charging system is abnormal.

Specifically, the judgement unit 500 only carries out state judgement once, and determines the state of the charging system based on the result of the one state judgement. However, there are risks in this method. Because many states need to be judged in the state judgment process, it is inevitable that one or several states is changed to abnormal under the affection of other factors, which causes the state judgment result of the whole charging system to be abnormal. In order to avoid this situation, the state judgment process may be repeatedly performed, and the state of the charging system is determined to be abnormal only if the number of times that the judgment result of an item is continuously No is greater than a preset value.

For example, the preset value is 3, and when the state judgment process is performed for a first time, the temperature of the charging system is higher than the system standard temperature, so it is counted that the judgement result is No continuously for one time, which is less than three times, then the state judgment process can be performed for a second time, and the temperature of the charging system is still higher than the system standard temperature, so it is counted that the judgement result is No continuously for two times, which is less than three times, then the state judgment process can be performed for a third time, and the temperature of the charging system is still higher than the system standard temperature, so it is counted that the judgement result is No continuously for three times, and since three times is reached, it is determined that the charging system is abnormal.

Of course, if the temperature of the charging system is lower than the system standard temperature during the performance of the state judgment process for a third time, it is determined that the state of the charging system is normal.

However, it is also inevitable that for the judgment result of a certain item, after the judgment result is No continuously for several times, the subsequent judgment result of Yes may be caused by special reasons including that the judgment is deviated during the state collection, or the judgment result is Yes due to other emergencies. Therefore, for any one of the judgment results, it can be determined that the state of the charging system is normal only when the judgment result is Yes continuously for B times after the judgment result is No continuously for A times. The values of A and B may be set according to the actual situation, and is not specifically limited herein.

If the state of the charging system is abnormal, abnormal information may be sent to the human-machine interaction module 200, to remind the automobile owner to pay attention to this situation.

In the embodiment of the present disclosure, the judgement unit 500 is further configured to judge whether the charging demand information satisfies a preset range upon receipt of the charging demand information of the electric automobile;
if yes, perform the judgement process based on the charging demand information, and determine the number N of the power source units to be turned on in the power source module; and
if not, send prompt information indicating that the charging demand is out of range to the human-machine interaction module 200.

For the demanded charging current, it is necessary to judge whether the charging current is within a set current range; and the number N of the demanded power source units may be determined by the method described above.

In this embodiment, the performance of the electric automobile determines that the electric automobile has a maximum allowable charging current, and each of the power source units in the charging system at the factory also determines that the charging system has a maximum output current. A maximum value of the set current range should be a smaller value of the maximum allowable charging current of the electric automobile and the maximum allowable output current of the charging system, and a minimum value of the set current range should be at least 0 ampere.

The charging voltage of electric automobiles is generally a set voltage at the factory.

The state judgment process is performed only when the charging demand information satisfies the preset range, otherwise prompt information indicating that the charging demand is out of range is sent to the human-machine interaction module 200. After viewing the prompt information through the human-machine interaction module 200, the automobile owner may re-enter the charging demand, and again perform the above process of judging whether the charging demand information satisfies the preset range until the charging demand information satisfies the preset range. Alternatively, prompt information indicating that the charging demand is out of range may be sent to the human-machine interaction module 200, and an appropriate preset range may be sent at the same time, so that the automobile owner can re-enter the charging demand within the appropriate preset range, thereby saving the performing time and improving the charging efficiency.

In the embodiment of the present disclosure, the selection unit 600 is further configured to select normal power source units based on the attributes of all the power source units in the power source module 300;
the determining, by the selection unit 600, the power source unit to be turned on in the power source module 300 based on the charging demand information further includes: determining the power source unit to be turned on among the selected power source units based on the charging demand information.

Specifically, the charging demand information includes a charging current and a charging electricity quantity. Since the output current of the power source unit is a set current, the number N of the demanded power source units may be obtained by dividing the charging current by the set current; all the power source units may be numbered in an order of 1, 2, 3, ..., M, and the power source units numbered as 1-N is selected as the power source unit to be turned on. The charging electricity quantity is that demanded by the automobile owner, and may also be the charging time.

In addition, the selection unit 600 is further configured to select normal power source units based on the attributes of all the power source units in the power source module 300;
the determining, by the selection unit 600, the power source unit to be turned on in the power source module 300 based on the charging demand information further includes: determining the power source unit to be turned on among the selected power source units based on the charging demand information and a power source performance.

Specifically, the power source performance includes a failure number and a used duration;
the selection unit 600 is further configured to sort the selected power source in an order of the failure numbers from small to large and the used durations from small to large; and select the first N power source units in the sorted power source units as the power source units to be turned on according to the number N of the power source units to be turned on in the power source module.

In this embodiment, the failure number and the used duration may be obtained from the historical data of the power source unit. Firstly, the failure numbers may be sorted from small to large and the used durations may be sorted from small to large to obtain a failure order and a duration order, and the failure order may be fine-tuned by using the duration order, i.e., if the failure numbers of a plurality of power source units are the same, the duration orders of the plurality of power source units may be checked to rank the failure orders corresponding to the power source units with higher time orders in the front, and rank the failure orders corresponding to the power source units with lower time orders in the rear.

In the embodiment of the present disclosure, the main control module 100 is further configured to calculate a difference between input power and output power of the charging system in real time in a charging process of the electric automobile;
if the difference is less than a set value, continue to charge the electric automobile; and
if the difference is greater than the set value, stop charging the electric automobile.

In the charging process, it is necessary to calculate the input power and output power of the charging system in real time, in which the input power of the charging system is a product of an input voltage and an input current of the charging system, and the output power of the charging system is a product of an output voltage and an output current of the charging system. The input voltage and the input current are a voltage and a current input by the power grid to the charging system, and the output voltage and the output current are a voltage and a current output by the charging system to the electric automobile.

The difference between the input power and the output power is a loss value of the charging system itself. If the loss value is less than the set value, it means a normal loss; and if the loss value is greater than the set value, it means an abnormal loss and the charging should be stopped. After the charging is stopped, abnormal information may be sent to the human-machine interaction module 200 to remind the automobile owner to pay attention to it.

In the embodiment of the present disclosure, the main control module 100 is further configured to judge whether the temperature of each of the power source units having been turned on exceeds a power source standard temperature in a charging process of the electric automobile;
if the temperature of a power source unit having been turned on exceeds the power source standard temperature, decrease output current of this power source unit and increase output current of other power source units having been turned on.

Specifically, the output current of this power source unit having been turned on may be decreased based on a current-temperature change curve configured in the power source unit at the factory. In the current-temperature change curve, the abscissa indicates the temperature and the ordinate indicates the output current, and the curve reflects a trend of the output current of the power source unit which changes with the temperature. When the temperature of the power source unit having been turned on exceeds the power source standard temperature, the output current of this power source unit is decreased based on the current-temperature change curve, so that the output current of this power source unit is lower than a maximum output current of the power source at this temperature. In order to keep the output current of the whole charging system being constant, it is necessary to increase the output current of other power source units having been turned on, but it also needs to ensure that the output current of other power source units having been turned on does not exceed the maximum output current of the power source based on the current-temperature change curve.

In the embodiment of the present disclosure, the main control module 100 is further configured to judge whether there is any power source unit having not been turned on before increasing the output current of other power source units having been turned on;
if yes, send the turn-on signal to the power source branch in which the power source unit having not been turned on is located, and send the turn-off signal to the power source branch in which the power source unit with the temperature exceeding the power source standard temperature is located; and
if not, increase the output current of other power source units having been turned on, and decrease the output current of the power source unit with the temperature exceeding the power source standard temperature.

Of course, if the temperature of a power source unit having been turned on exceeds the power source standard temperature, the output current of the power source unit may be decreased so that the output current of the power source unit is lower than the maximum output current of the power source at this temperature. In order to ensure the constant output current of the whole charging system, the power source unit having not been turned on may also be turned on.

Exemplarily, as described above, the selected power sources are sorted based on the failure numbers from small to large and the used durations from small to large. It is possible to select an (N+1)-th power source unit to be turned on based on the sorting order. If the output current of the whole charging system cannot be kept constant after turning on the (N+1)-th power source unit, it is possible to continue to turn on an (N+2)-th power source unit, and so on. Of course, it is necessary to ensure that the temperature of each of the power source units having been turned on does not exceed the power source standard temperature.

In the embodiment of the present disclosure, the charging system further includes a cooling fan;
the main control module 100 is further configured to judge whether a temperature of the charging system is greater than a system standard temperature in a charging process of the electric automobile;
if yes, increase a rotating speed of the cooling fan; and
if not, keep the rotating speed of the cooling fan unchanged.

In the embodiment of the present disclosure, the main control module 100 is further configured to judge whether output current of the charging system is greater than a current threshold in a charging process of the electric automobile;
if yes, send prompt information of a fault to the human-machine interaction module 200 and stops charging the electric automobile; and
if not, continue to charge the electric automobile.

In this embodiment, the output current of the charging system may be detected by the system ADC sampling unit, and the current threshold may be the smaller of the maximum allowable charging current of the electric automobile and the maximum allowable output current of the charging system. If the output current of the charging system is greater than the current threshold, prompt information is sent to the human-machine interaction module 200 to remind the automobile owner to pay attention to this situation.

It should be noted that user information (including but not limited to user device information, user personal information, etc.) and data (including but not limited to data for analysis, stored data, displayed data, etc.) involved in the present disclosure are those authorized by the users or fully authorized by all parties.

Referring to FIG. 4, based on the charging system for the electric automobile described above, an embodiment of the present disclosure further provides a charging method for an electric automobile, which is applied to the main control module 100 of the charging system for the electric automobile, and the charging method includes:
S101: receiving charging demand information of the electric automobile;
S102: determining the power source unit to be turned on or the power source unit to be turned off in the power source module based on the charging demand information when receiving a charging demand of the electric automobile;
S103: sending the turn-on or the turn-off signal to the power source branch in which the power source unit to be turned on or the power source unit to be turned off is located.

In this embodiment, the charging demand information of the electric automobile includes a charging current and a charging electricity quantity. The determining a power source unit to be turned on in a power source module based on the charging demand information when receiving a charging demand of the electric automobile is specifically as follows: since the output current of the power source unit is a set current determined at the factory and the output voltage is a set voltage determined at the factory, the number N of the demanded power source units may be obtained by dividing the charging current by the set current; all the power source units may be numbered in an order of 1, 2, 3, ..., M, and the power source units numbered as 1-N are selected as the power source unit to be turned on.

The charging electricity quantity is that determined by the automobile owner, and may also be the charging time.

Based on the charging method for the electric automobile as described above, an embodiment of the present disclosure further provides a charging apparatus for an electric automobile. The apparatus may include systems (including distributed systems), software (applications), modules, components, servers, clients, etc. that configured with the methods described in the embodiments of the present disclosure in conjunction with necessary hardware. Based on the same innovative concept, the apparatus in one or more embodiments of the present disclosure are as described in the following embodiments. Since the solution to the problem of the apparatus is similar to the method, the implementation of the apparatus in the embodiment of the present disclosure may refer to the implementation of the method as described above, and the repeated content is omitted. As used below, the term "unit" or "module" may be a combination of software and/or hardware each of which realizes a predetermined function. Although the apparatus described in the following embodiments are exemplarily implemented with software, the implementation with hardware, or a combination of software and hardware, is also possible and contemplated.

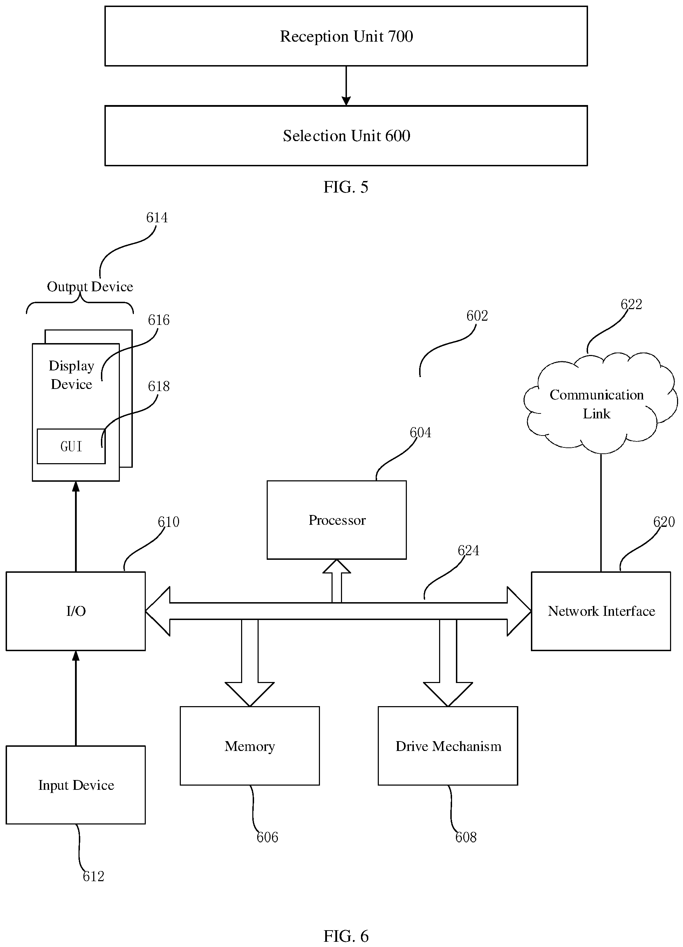

Specifically, FIG. 5 illustrates a schematic diagram of a module structure of a charging apparatus for an electric automobile according to an embodiment of the present disclosure. As illustrated in FIG. 5, the charging apparatus for the electric automobile according to the embodiment of the present disclosure includes a reception unit 700 and a selection unit 600.

The reception unit 700 is configured to receive charging demand information of the electric automobile; and
the selection unit 600 is configured to determine the power source unit to be turned on or the power source unit to be turned off in a power source module based on the charging demand information when receiving a charging demand of the electric automobile; and send a turn-on signal or a turn-off signal to a power source branch in which the power source unit to be turned on or the power source unit to be turned off is located.

Based on the charging method for the electric automobile as described above, an embodiment of the present disclosure further provides an electric automobile, including any charging system for the electric automobile as described above.

Referring to FIG. 6, based on the charging method for the electric automobile, an embodiment of the present disclosure further provides a computer device 602 in which the above method is executed. The computer device 602 may include one or more processors 604, such as one or more central processing units (CPU) or graphics processors (GPU), each of which may implement one or more hardware threads. The computer device 602 may further include a memory 606 storing any type of information such as codes, settings, data, etc. In a specific embodiment, a computer program is stored in the memory 606 and executed by the processor 604, and when executed by the processor 604, the computer program may execute instructions according to the above method. For example, without limitation, the memory 606 may include any one or combinations of any type of RAM, any type of ROM, a flash memory device, a hard disk, an optical disk, etc. More generally, any memory may use any technology to store information. Further, any memory may provide volatile or nonvolatile retention of information. Further, any memory may represent a stationary or removable component of the computer device 602. In one case, when the processor 604 executes an associated instruction stored in any memory or combination of memories, the computer device 602 may implement any operation of the associated instruction. The computer device 602 further includes one or more drive mechanisms 608 interacted with any memory, such as a hard disk drive mechanism, an optical disk drive mechanism, or the like.

The computer device 602 may further include an input/output (I/O) module 610 configured to receive various inputs (via an input device 612) and provide various outputs (via an output device 614). A specific output mechanism may include a display device 616 and an associated graphical user interface (GUI) 618. In other embodiments, the computer device 602 may not include the input/output (I/O) module 610, the input device 612 or the output device 614, and only serve as a computer device in a network. The computer device 602 may further include one or more network interfaces 620 configured to exchange data with other devices via one or more communication links 622. One or more communication buses 624 couple the components described above together.

The communication link 622 may be implemented in any way, for example, through a local area network, a wide area network (e.g., the Internet), a point-to-point connection, etc., or any combination thereof. The communication link 622 may include any combination of a hardwired link, a wireless link, a router, a gateway function, a name server, etc. governed by any protocol or combination of protocols.

In correspondence with the method in FIG. 4, the embodiment of the present disclosure further provides a computer-readable storage medium storing a computer program, and when executed by a processor, the computer program implements the steps of the above method.

The embodiment of the present disclosure further provides a computer-readable instruction, and when the instruction is executed by a processor, a program therein enables the processor to implement the method as illustrated in FIG. 4.

The embodiment of the present disclosure further provides an electric automobile, including the charging system for the electric automobile according to any one of the above embodiments.

It should be understood that in various embodiments of the present disclosure, the serial number of each of the above processes does not mean the order of execution, and the order of execution of each of the processes should be determined depending on the function and the internal logic, and should not constitute any limitation to the implementation process of the embodiments of the present disclosure.

It should also be understood that in the embodiments of the present disclosure, the term "and/or" is only an association relationship that describes the associated objects, indicating that there may be three relationships. For example, A and/or B may mean three situations, i.e., A exists alone, A and B exist simultaneously, and B exists alone. In addition, the character "/" in the present disclosure generally indicates that the context objects are in an "or" relationship.

Those of ordinary skill in the art will appreciate that the units and algorithm steps of various examples described in connection with the embodiments disclosed in the present disclosure can be implemented as electronic hardware, computer software, or a combination thereof. In order to clearly illustrate the interchangeability of hardware and software, the components and steps of various examples have been generally described in terms of functions in the above descriptions. Whether these functions are implemented in hardware or software depends on the specific application and the design constraints of the technical solutions. Professionals may use different methods to implement the described functions for each specific application, and such implementation should not be considered as beyond the scope of the present disclosure.

It can be clearly understood by those skilled in the art that for the convenience and conciseness of the description, the specific working processes of the systems, apparatus and units described above can refer to the corresponding processes in the foregoing method embodiments, and will not be repeated here.

In several embodiments provided herein, it should be understood that the disclosed systems, apparatus and methods can be implemented in other ways. For example, the apparatus embodiments described above are merely illustrative, e.g., the unit partitioning is only a logical function partitioning, and other partitioning modes are possible during the actual implementation. For example, a plurality of units or components may be combined or integrated into another system, or some features may be omitted or not executed. In addition, the mutual coupling or direct coupling or communication connection illustrated or discussed may be an indirect coupling or communication connection through some interfaces, means or units, and may be in electrical, mechanical or other forms.

The units described as separate components may or may not be physically separated, and the components displayed as units may or may not be physical units, that is, they may be located in one place or distributed to plurality of network units. Some or all of the units may be selected according to the actual needs to achieve the purpose of this embodiment.

In addition, each functional unit in each embodiment of the present disclosure may be integrated into one processing unit, or each unit may exist physically alone, or two or more units may be integrated into one unit. The above integrated units may be realized in the form of hardware or software functional units.

The units described as separate components may or may not be physically separated, and the components displayed as units may or may not be physical units, i.e., they may be located in one place or distributed to a plurality of network units. Some or all of the units can be selected according to the actual needs to achieve the objectives of the embodiments of the present disclosure.

In addition, the functional units in the embodiments of the present disclosure may be integrated into one processing unit, or each unit may be existed physically alone, or two or more units may be integrated into one unit. The integrated unit may be implemented in the form of hardware or a software functional unit.

If being implemented in the form of a software functional unit and sold or used as an independent product, the integrated unit may be stored in a computer readable storage medium. Based on such understanding, the essence of the technical solutions of the present disclosure, i.e., portions making contributions to the prior art, or all or part of the technical solutions may be embodied in the form of a software product, and the computer software product is stored in a storage medium and includes several instructions for causing a computer device (e.g., a personal computer, a server, a network device, etc.) to implement all or part of the steps of the methods described in the embodiments of the present disclosure. The foregoing storage medium includes various media that can store program codes, such as a USB flash disk, a mobile hard disk, a Read-Only Memory (ROM), a Random-Access Memory (RAM), a magnetic disk, or an optical disk.

Specific embodiments are used herein to illustrate the principles and the implementations of the present disclosure, and the descriptions of the above embodiments are only intended to help understanding of the method and the core idea of the present disclosure. Meanwhile, those of ordinary skilled in the art may modify the implementations and the application scope according to the concept of the present disclosure. To sum up, the content of this specification should not be construed as limitations to the present disclosure.

## Claims

1. A charging system for an electric automobile, comprising: a human-machine interaction module, a power source module and a main control module;
the human-machine interaction module is connected to the main control module, and configured to receive charging demand information of the electric automobile and send the charging demand information to the main control module;
the power source module comprises a plurality of power source branches each of which comprises a switch unit and a power source unit, and the switch unit is configured to switch on or switch off the power source branch in which it is located based on a turn-on signal or a turn-off signal of the main control module; and
the main control module is configured to determine, upon receipt of a charging demand of the electric automobile, the power source unit to be turned on or the power source unit to be turned off in the power source module based on the charging demand information, and send the turn-on signal or the turn-off signal to the power source branch in which the power source unit to be turned on or the power source unit to be turned off is located, to control the switch unit to switch on or switch off and the power source unit to be turned on or turned off.

2. The charging system according to claim 1, wherein the plurality of power source branches are connected in parallel.

3. The charging system according to claim 1, further comprising a state detection module;
wherein the state detection module is connected to the main control module, and configured to detect a state of the charging system in real time and send state information of the charging system to the main control module; and
the main control module is further configured to analyze charging state information of the charging system upon receipt of the charging demand of the electric automobile, and if an analysis result indicates a normal state, perform the step of determining the power source unit to be turned on in the power source module based on the charging demand information, and sending the turn-on signal to the power source branch in which the power source unit to be turned on is located, to control the switch unit to switch on and the power source unit to be turned on.

4. The charging system according to claim 3, wherein the state information of the charging system comprises: an input voltage of the charging system, a temperature of the charging system and an attribute of each power source unit;
the main control module comprises a judgement unit and a selection unit;
the judgement unit is configured to, upon receipt of the charging demand of the electric automobile, perform a state judgement process including the following items: judging whether the input voltage of the charging system is within a standard voltage range, whether the temperature of the charging system is below a system standard temperature, and whether the attributes of all the power source units are normal;
if the judgment results of all the items are Yes, determining that the state of the charging system is normal; and
if the judgment result of one of the items is No, determining that the state of the charging system is abnormal; and
the selection unit is configured to determine the power source unit to be turned on in the power source module based on the charging demand information, and send the turn-on signal to the power source branch in which the power source unit to be turned on is located, to control the switch unit to switch on and the power source unit to be turned on.

5. The charging system according to claim 4, wherein,
the judgement unit is further configured to, if the judgment result of one of the items is No, perform the following steps to determine whether the state of the charging system is abnormal: continuously judging said item and counting the number of times that the judgment result is No; if the counted number of times does not reach a preset number of times, the judgment result of said item is changed to Yes, determining that the state of the charging system is normal; and if the counted number of times reaches the preset number of times, the judgment result of said item is still No, determining that the state of the charging system is abnormal.

6. The charging system according to claim 4, wherein,
the judgement unit is further configured to judge whether the charging demand information satisfies a preset range upon receipt of the charging demand information of the electric automobile;
if yes, perform the judgement process based on the charging demand information, and determine the number N of the power source units to be turned on in the power source module; and
if not, send prompt information indicating that the charging demand is out of range to the human-machine interaction module.

7. The charging system according to claim 4, wherein the selection unit is further configured to select normal power source units based on the attributes of all the power source units in the power source module; and
the determining, by the selection unit, the power source unit to be turned on in the power source module based on the charging demand information further comprises: determining the power source unit to be turned on among the selected power source units based on the charging demand information.

8. The charging system according to claim 6, wherein the selection unit is further configured to select normal power source units based on the attributes of all the power source units in the power source module; and
the determining, by the selection unit, the power source unit to be turned on in the power source module based on the charging demand information further comprises: determining the power source unit to be turned on among the selected power source unit based on the charging demand information and a power source performance.

9. The charging system according to claim 8, wherein the power source performance comprises a failure number and a used duration; and
the selection unit is further configured to sort the selected power source in an order of the failure numbers from small to large and the used durations from small to large; and select the first N power source units in the sorted power source units as the power source units to be turned on according to the number N of the power source units to be turned on in the power source module.

10. The charging system according to claim 1, wherein,
the main control module is further configured to calculate a difference between input power and output power of the charging system in real time in a charging process of the electric automobile;
if the difference is less than a set value, continue to charge the electric automobile; and
if the difference is greater than the set value, stop charging the electric automobile.

11. The charging system according to claim 1, wherein,
the main control module is further configured to judge whether the temperature of each of the power source units having been turned on exceeds a power source standard temperature in a charging process of the electric automobile; and
if the temperature of one of the power source units having been turned on exceeds the power source standard temperature, decrease output current of said power source unit and increase output current of other power source units having been turned on.

12. The charging system according to claim 11, wherein,
the main control module is further configured to judge whether there is any power source unit having not been turned on before increasing the output current of other power source units having been turned on;
if yes, send the turn-on signal to the power source branch in which the power source unit having not been turned on is located, and send the turn-off signal to the power source branch in which the power source unit with the temperature exceeding the power source standard temperature is located; and
if not, increase the output current of other power source units having been turned on, and decrease the output current of the power source unit with the temperature exceeding the power source standard temperature.

13. The charging system according to claim 1, further comprising a cooling fan;
the main control module is further configured to judge whether a temperature of the charging system is greater than a system standard temperature in a charging process of the electric automobile;
if yes, increase a rotating speed of the cooling fan; and
if not, keep the rotating speed of the cooling fan unchanged.

14. The charging system according to claim 1, wherein,
the main control module is further configured to judge whether output current of the charging system is greater than a current threshold in a charging process of the electric automobile;
if yes, send prompt information of a fault to the human-machine interaction module and stops charging the electric automobile; and
if not, continue to charge the electric automobile.

15. A charging method for an electric automobile, which is applied to the main control module of the charging system for the electric automobile according to any one of claims 1 to 14, the charging method comprising:
receiving charging demand information of the electric automobile;
determining the power source unit to be turned on or the power source unit to be turned off in the power source module based on the charging demand information, when receiving a charging demand of the electric automobile; and
sending the turn-on or the turn-off signal to the power source branch in which the power source unit to be turned on or the power source unit to be turned off is located.

16. A computer device, comprising a memory, a processor, and a computer program stored on the memory, wherein when executed by a processor, the computer program implements the method according to claim 15.

17. A computer-readable storage medium storing a computer program, wherein when executed by a processor of a computer device, the computer program implements the method according to claim 15.

18. An electric automobile, comprising the charging system for the electric automobile according to any one of claims 1 to 14.
